# EUROPEAN PATENT SPECIFICATION

(11) **EP 4 227 720 B1**
(45) Date of publication and mention of the grant of the patent: **12.02.2025**
(21) Application number: 20956763.5
(22) Date of filing: 09.10.2020
(51) Int. Cl.: G02B 6/44

(54) **OPTICAL CABLE**
OPTISCHES KABEL
CÂBLE OPTIQUE

(43) Date of publication of application: 16.08.2023
(73) Proprietor: Nippon Telegraph And Telephone Corporation, Chiyoda-ku Tokyo 100-8116 (JP)
(72) Inventor: MARUO, Yuta, Musashino-shi, Tokyo 180-8585 (JP); SAKURAI, Akira, Musashino-shi, Tokyo 180-8585 (JP); YAMADA, Yusuke, Musashino-shi, Tokyo 180-8585 (JP); TETSUTANI, Shigekatsu, Musashino-shi, Tokyo 180-8585 (JP); TANIOKA, Hiroaki, Musashino-shi, Tokyo 180-8585 (JP)
(74) Representative: v. Bezold & Partner Patentanwälte - PartG mbB
(86) International application number: PCT/JP2020/038272
(87) International publication number: WO 2022/074816

(56) References cited:
- WO-A1-2018/150947
- CN-A- 104 700 953
- JP-A- 2015 215 448
- JP-A- 2019 128 363
- JP-A- S62 286 005
- JP-A- S63 158 513
- JP-U- S6 212 112
- US-A- 5 838 863
- US-A1- 2018 188 461
- US-A1- 2018 292 625

## Description

### [Technical Field]

The present disclosure relates to an optical cable.

### [Background Art]

For general prior art, reference is made to PTL2, PTL3, and PTL4.

PTL2 discloses an optical fiber cable, in which a plurality of optical fibers are placed outside a buffer layer on the outer circumference of a tension member. An interposing cord is placed between the optical fibers. A tape-wrapped layer is formed around the circumference of the interposing cord and the optical fibers, and a sheath is coated on the outside of the interposing cord and the tape-wrapped layer. At least one of the interposing cord and the tape-wrapped layer contains a substance that becomes gelatinous when water is absorbed and exudes from the interposing cord or the tape-wrapped layer, thereby sealing the surrounding voids.

PTL3 discloses an optical cable that includes an optical module which includes a strength member, a plurality of optical fibers arranged about the strength member, the optical fibers being arranged substantially on a circumference concentric with the strength member, and a retaining element arranged about the plurality of optical fibers. PTL4 discloses a cable whose inner opening space has been sealed with a polyurethane resin formed with a polyurethane resin-forming sealing material comprising components (A) and (B). (A): a component comprising a dispersion of a water-insoluble water absorbent resin or its hydrogel in a polyol, wherein said resin is formed by polymerizing in the polyol a water soluble monomer or its precursor and crosslinking agent and/or polysaccharide; and (B): a component comprising an organic polyisocyanate; and sealing process of the same.

At present, optical fibers having low loss and wide band characteristics have been introduced into communication networks in order to provide various and wide-band multimedia services. In usage of optical fibers in a communication network, the optical fibers are bundled and covered to be used as an optical cable. Conventionally, for designing a structure of an optical cable, it is important to (1) prevent loss in optical fibers from increasing and (2) secure long-term reliability, with respect to external forces such as tension and bending, acting on the optical fibers during manufacturing, laying and using, in long-term, the optical cable. In other words, it is an important problem to select a structure which prevents, as much as possible, external forces, such as tension and bending, from acting on the optical fibers. In particular, it is important to provide a design free from increase in optical loss due to bending of the optical fibers.

In addition, in constructing a communication network using optical cables, together with increase in demand for optical fibers, underground conduits, ducts in buildings and the like may become insufficient so that a plurality of optical cables have to be laid in one conduit, duct, or the like. In this situation, depending on a diameter of a previously-laid optical cable, the conduit, duct, or the like may have a space that is too small to make a desired optical cable laid therein and then needs another conduit or duct for installation, which results in increasing the cost, so that optical cables having a smaller diameter and a higher density have been proposed (for example, PTL 1). By applying optical fibers that are resistant to bending, long-term reliability of such an optical cable can be secured without increase in loss of the optical fibers.

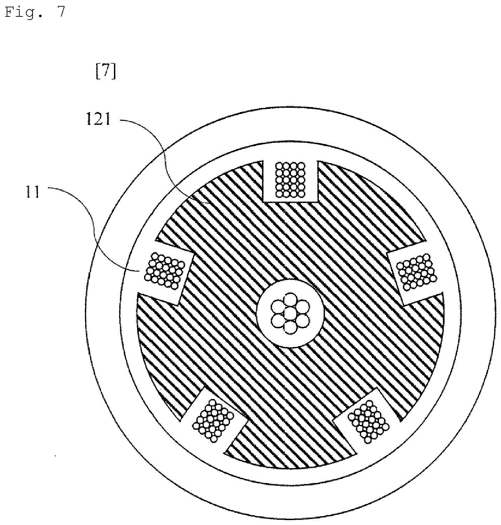

On the other hand, in recent years, research and development on optical fibers have greatly progressed, and optical fibers suitable for transmitting a large amount of data at a high speed have been proposed. However, due to poor bending strength of such an optical fiber, the optical fiber is made into a cable as shown in Fig. 7, where an optical fiber 11 is mounted in a groove of a slot rod 121 to protect the optical fiber 11 from external force and prevent a large force from acting on the optical fiber 11 as much as possible. Recently, in order to realize a small-diameter and high-density optical cable using the optical fiber 11 with poor bending strength, a technique for reducing mounting density by adjustment to leave a slight gap in the optical cable, so as to prevent the optical fibers 11 from coming into strong contact with each other, has been examined (for example, NPL 1).

However, under the condition of decreasing mounting density of the optical fibers 11 in the optical cable, while loss of the optical fibers 11 can be suppressed, movement of the optical fibers 11 in the optical cable causes the optical fibers 11 to bend in a housing used at a location where optical cables are connected to each other, making it difficult to secure long-term reliability. Furthermore, although outer peripheries of a plurality of optical fibers 11 in the optical cable can be bundled, this brings the optical fibers 11 into contact with each other and increases optical loss.

### [Citation List]

### [Patent Literature]

[PTL 1] Japanese Patent Application Publication No. 2007-41568
[PTL 2] JP S63 158513 A
[PTL 3] US 2018/292625 A1
[PTL 4] US 5,838,863 A

### [Non Patent Literature]

[NPL 1]
Yusuke Yamada, et al, "Optical Loss Characteristics of Ultrahigh-density Cable and Dependency of Measured Lateral Pressure to Fibers in Cable-core", IEICE Technical Report, Internet <URL: https://www.ieice.org/ken/paper/20180831i1fS/>

### [Summary of Invention]

### [Technical Problem]

An object of the present disclosure is to prevent optical fibers from moving and from having increased optical loss, by reducing a mounting density of the optical fibers and preventing the optical fibers from coming into contact with each other.

### [Solution to Problem]

In order to achieve the object described above, an optical cable according to the present disclosure is an optical cable according to claim 1.

### [Advantageous Effects of Invention]

According to an optical cable of the present disclosure, a mounting density of optical fibers is reduced by providing the interposition in the bundle tape, and the optical fibers are prevented from moving and from having increased optical loss, increasing by preventing the optical fibers from coming into contact with each other.

### [Brief Description of Drawings]

[Fig. 1]

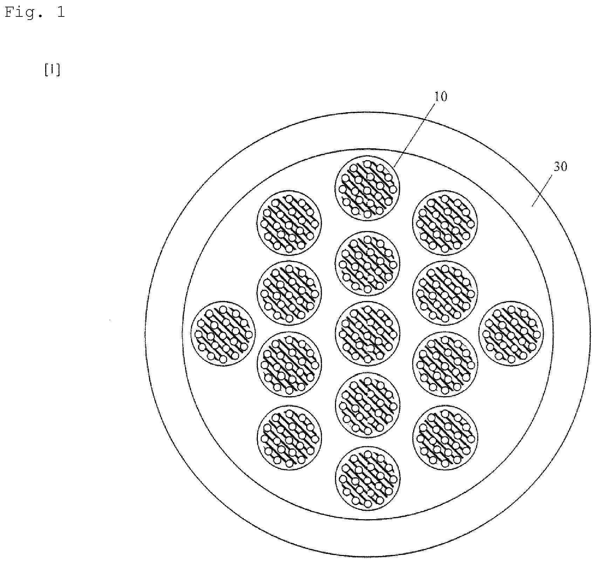

   Fig. 1 is a sectional view illustrating an example of a structure of an optical cable according to the present disclosure.
[Fig. 2]

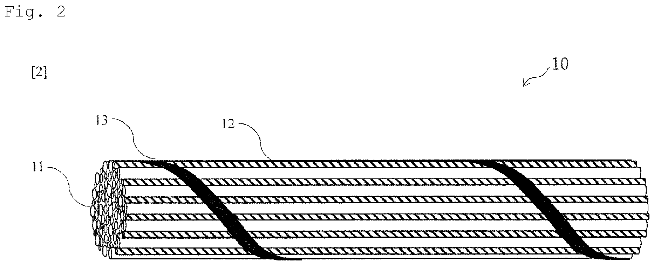

   Fig. 2 is a schematic view illustrating an example of a structure of a unit according to the present disclosure.
[Fig. 3]

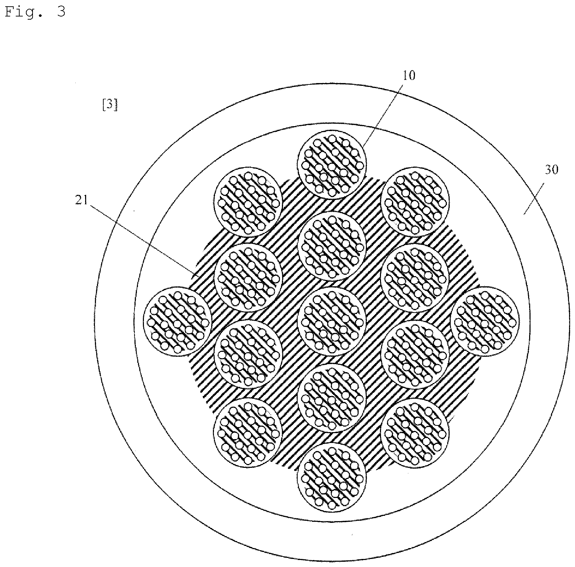

   Fig. 3 is a sectional view illustrating an example of a structure of an optical cable according to the present disclosure.
[Fig. 4]

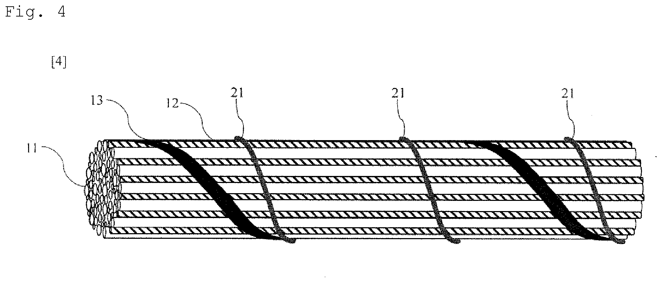

   Fig. 4 is a sectional view illustrating an example of a structure of a unit according to the present disclosure.
[Fig. 5]

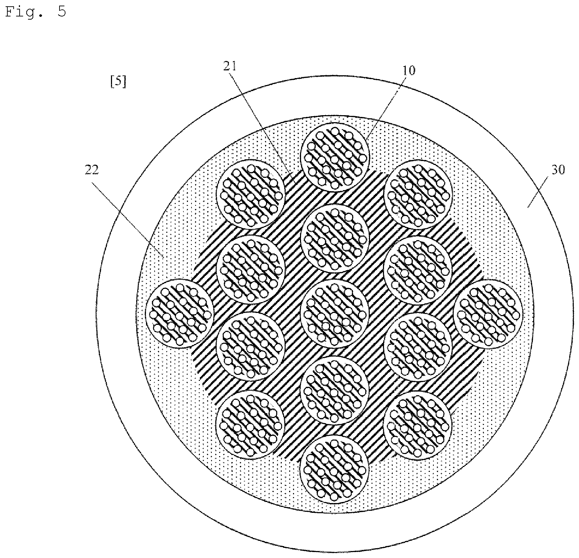

   Fig. 5 is a schematic view illustrating an example of a structure of an optical cable according to the present disclosure.
[Fig. 6]

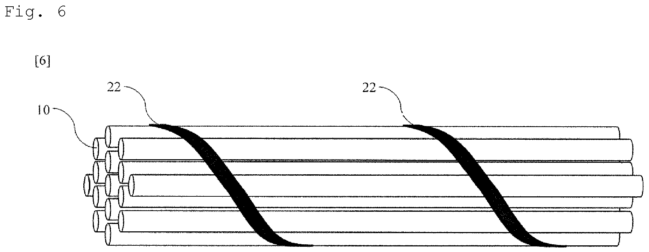

   Fig. 6 is a schematic view illustrating an example of a state where a jacket according to the present disclosure has been removed.
[Fig. 7]
   Fig. 7 represents an example of a structure of a 100-core optical cable mounted with 4-fiber ribbons.

### [Description of Embodiments]

Embodiments of the present disclosure will be described in detail below with reference to the drawings. It is to be understood that the present disclosure is not limited to the embodiments described below. The embodiments are merely exemplary and the present disclosure can be implemented in various modified and improved modes based on knowledge of those skilled in the art. Constituent elements with the same reference signs in the present specification and in the drawings represent the same constituent elements.

### (First embodiment)

An example of a structure of an optical cable according to the present disclosure will be described with reference to Figs. 1 to 2. Fig. 1 shows an example of a structure of an optical cable. In the optical cable according to the present embodiment, one or more units 10 are covered by a jacket 30. Fig. 2 shows an example of a unit that gathers optical fibers. The present optical cable is structured so as to have one or more units 10 in which at least one or more optical fibers 11 and a first interposition 12 that prevents the optical fibers 11 from coming into contact with each other are bundled with a bundle tape 13.

The unit 10 is an optical fiber bundle in which the optical fibers 11 and the first interposition 12 are densely gathered in a state of being brought into contact with each other and a bundle tape 13 is wound around an outer periphery thereof. The optical fibers 11 are single-core coated optical fibers in which a periphery of a bare fiber is covered with a coating or compose a fiber optic tape in which a plurality of single-core coated optical fibers are integrated. The first interposition 12 is a freely selected elastic body that is arranged between adjacent optical fibers 11 and is arranged in an entire longitudinal direction of the optical fibers 11.

In the optical cable according to the present embodiment, by bundling the optical fibers 11 and the first interposition 12 together, a mounting density of the optical fibers 11 can be reduced and the movement of the optical fibers 11 can be prevented. Further, the optical fibers 11 can be prevented from coming into contact with each other with the mounting density of the optical fibers 11 lowered, and an increase in optical loss can be suppressed.

The first interposition 12 is formed of a material softer than that of the coating of the optical fibers 11 so as to deform along the outer periphery of the optical fibers 11 with the optical fibers 11 being in contact therewith. Examples of the material of the first interposition 12 include a linear material obtained by bundling fibers of a polymer material such as polypropylene and a thin tape-like material such as a nonwoven fabric or a sponge.

As a material of the jacket 30, polyethylene, flame-retardant polyethylene, polyvinyl chloride or the like can be exemplified. The winding structure can include single winding with one bundle tape 13, cross winding, SZ twisting with two bundle tapes 13, and the like. These structures are similarly adopted in embodiments to be described later.

### (Second embodiment)

A structure of the optical cable according to the present disclosure will be described with reference to Figs. 3 and 4. Fig. 3 shows an example of a structure of an optical cable. Fig. 4 shows an example of a unit that gathers optical fibers. The present optical cable has a structure having: a plurality of units 10 in which at least one or more optical fibers 11 and a first interposition 12 that prevents the optical fibers 11 from coming into contact with each other are bundled with a bundle tape 13; and a second interposition 21 that prevents optical fibers 11 each included in different units 10 from coming into contact with each other.

The optical cable according to the present embodiment is an optical fiber bundle in which a plurality of units 10 and the second interposition 21 are densely gathered to be in contact with each other, and a jacket 30 is wound around an outer periphery thereof. The second interposition 21 may be, for example, a linear interposition or a tape-like interposition spirally wound around the outer periphery of the units 10 as shown in Fig. 4. While the second interposition 21 covers a part of the units 10 in Fig. 4, the second interposition 21 may cover the entire outer periphery of the units 10.

A material of the second interposition 21 is preferably a material which deforms along the outer periphery of the optical fibers 11 with the plurality of units 10 and the second interposition 21 densely gathered to be in contact with each other, and a similar material to the material of the first interposition 12 can be used. Accordingly, optical fibers 11 each included in different units 10 can be densely gathered while being prevented from coming into contact with each other.

In the present embodiment, by providing the second interposition 21 between the units 10, a plurality of the units 10 can be densely gathered. Therefore, the optical cable according to the present embodiment can reduce the mounting density of the optical fibers 11 and prevent the movement of the units 10 in which the optical fibers 11 are bundled. Furthermore, the units 10 can be prevented from coming into contact with each other with the mounting density of the optical fibers 11 lowered, and an increase in optical loss can be suppressed.

### (Third embodiment)

A structure of the optical cable according to the present disclosure will be described with reference to Figs. 5 and 6. Fig. 5 shows an example of a structure of an optical cable. Fig. 6 shows an example of a state in which a jacket has been removed. The optical cable according to the present embodiment has a structure including a plurality of units 10 and a second interposition 21 between the units 10 which prevents optical fibers 11 from coming into contact with each other and including a third interposition 22 in an outer periphery of the plurality of units 10 that prevents a jacket 30 and the optical fibers 11 from coming into contact with each other. The units 10 may have any of the structures shown in Fig. 2 and Fig. 4.

The optical cable according to the present embodiment is an optical fiber bundle in which a plurality of units 10 and second interposition 21 are densely gathered in contact with each other, the third interposition 22 is wound around an outer periphery thereof, and the jacket 30 is further wound around an outer periphery thereof. As the third interposition 22, for example, a linear interposition or a tape-like interposition spirally wound around the outer periphery of the plurality of units 10 as shown in Fig. 6 can be exemplified. While the third interposition 22 covers a part of the plurality of units 10 in Fig. 6, the third interposition 22 may cover the whole outer periphery of the plurality of units 10.

A material of the third interposition 22 is preferably a material which deforms along the outer periphery of each optical fiber 11 included in the plurality of units 10 with the plurality of units 10 and the second interposition 21 densely gathered to be in contact with each other. As the material of the third interposition 22, a similar material to the material of the first interposition 12 may be used and, for example, a linear material obtained by bundling fibers of a polymer material such as polypropylene or a thin tape-like material such as a nonwoven fabric or sponge can be exemplified.

In the optical cable according to the present embodiment, by providing the third interposition 22 on the outer periphery of the plurality of units 10, it is possible to prevent the jacket 30 and an optical fiber 11 from coming into contact with each other. Therefore, the optical cable according to the present embodiment can absorb a force from the jacket 30 due to curving or bending of the optical cable, using the third interposition 22, and can suppress an increase in optical loss.

### (Fourth embodiment)

A structure of the optical cable according to the present disclosure will be described with reference to Figs. 3 and 4. Fig. 3 shows an example of a structure of an optical cable. Fig. 4 shows an example of a unit that gathers optical fibers. An optical cable according to the present embodiment has a structure having a plurality of units 10 in which at least one or more optical fibers 11 and a first interposition 12 for preventing the optical fibers 11 from coming into contact with each other are bundled by a bundle tape 13, and a part or all of the first interposition 12 and a second interposition 21 are water-absorbent.

The same applies to an optical cable having a structure in which a third interposition 22 is provided between the jacket 30 and the units 10. By providing the water-absorbent interposition, water penetration into the optical cable can be prevented when a housing installed at a connection point of the optical cable is immersed in water. Therefore, the present embodiment is effective for an optical cable laid in an underground section.

### (Fifth embodiment)

Further, in each of the embodiments described above, by making a color of the first interposition 12, for preventing the optical fibers 11 from coming into contact with each other, different from colors of the bundle tape 13 and the optical fibers 11, distinguishability of the first interposition 12 can be improved. Therefore, in an operation of removing the first interposition 12 to disassemble the optical cable, the bundle tape 13 and the optical fibers 11 can be prevented from being cut by mistake.

The present disclosure is applicable to any optical fiber capable of propagating light including a single-mode fiber, a multi-mode fiber, a multi-core optical fiber having a plurality of cores, and a photonic crystal fiber having a plurality of holes in a cross section of the optical fiber. Further, optical fibers, which are included in each unit, and units, which are provided in an optical cable, are not limited to being bundled in a straight shape and may be twisted together.

### [Industrial Applicability]

The present disclosure is applicable to information and communication industries.

### [Reference Signs List]

- 10: Unit
- 11: Optical fiber
- 12: First interposition
- 13: Bundle tape
- 21: Second interposition
- 22: Third interposition
- 30: Jacket
- 121: Slot rod

## Claims

1. An optical cable comprising one or more units (10) each including only a plurality of optical fibers (11), a first interposition (12), and a bundle tape (13); wherein:
the plurality of optical fibers (11)is bundled by the bundle tape (13)
the first interposition (12)is provided between the optical fibers (11) for preventing the optical fibers (11) from coming into contact with each other, and
the optical fibers (11) and the first interposition (12) are bundled by the bundle tape (13) in a state where the optical fibers (11) and the first interposition (12) are in contact with each other.

2. The optical cable according to claim 1, comprising:
a plurality of said units (10); and
a second interposition (21) provided between the units (10) which prevents optical fibers (11) each included in different units (10) of the units (10) from coming into contact with each other, wherein
the units (10) are bundled by a jacket (30) of the optical cable in a state where the units (10) and the second interposition (21) are in contact with each other.

3. The optical cable according to claim 2, wherein the second interposition (21) has water absorbency.

4. The optical cable according to claim 2 or 3, comprising
a third interposition (22) that prevents an optical fiber (11) included in any of the units (10) from coming into contact with the jacket (30).

5. The optical cable according to claim 4, wherein the third interposition (22) has water absorbency.

6. The optical cable according to any one of claims 1 to 5, wherein
the first interposition (12) has water absorbency.

7. The optical cable according to any one of claims 1 to 6, wherein
a color of the first interposition (12) differs from those of the bundle tape (13) and the optical fibers (11).

## Patentansprüche

1. Optisches Kabel, aufweisend eine oder mehrere Einheiten (10), die jeweils nur eine Mehrzahl von optischen Fasern (11), eine erste Einfügung (12) und ein Bündelband (13) aufweisen; wobei:
die Vielzahl von optischen Fasern (11) durch das Bündelband (13) gebündelt ist
die erste Einfügung (12) zwischen den optischen Fasern (11) vorgesehen ist, um zu verhindern, dass die optischen Fasern (11) einander kontaktieren, und
die optischen Fasern (11) und die erste Einfügung (12) durch das Bündelband (13) in einem Zustand gebündelt sind, in dem die optischen Fasern (11) und die erste Einfügung (12) miteinander in Kontakt sind.

2. Optisches Kabel nach Anspruch 1, aufweisend:
eine Vielzahl besagter Einheiten (10); und
eine zweite Einfügung (21), die zwischen den Einheiten (10) vorgesehen ist und verhindert, dass optische Fasern (11), die jeweils in verschiedenen Einheiten (10) der Einheiten (10) enthalten sind, miteinander in Kontakt kommen, wobei
die Einheiten (10) durch einen Mantel (30) des optischen Kabels in einem Zustand gebündelt sind, in dem die Einheiten (10) und die zweite Einfügung (21) in Kontakt miteinander sind.

3. Optisches Kabel nach Anspruch 2, wobei die zweite Einfügung (21) wasserabsorbierend ist.

4. Optisches Kabel nach Anspruch 2 oder 3, aufweisend
eine dritte Einfügung (22), die verhindert, dass eine in einer der Einheiten (10) enthaltene optische Faser (11) in Kontakt mit dem Mantel (30) kommt.

5. Optisches Kabel nach Anspruch 4, wobei die dritte Einlage (22) wasserabsorbierend ist.

6. Optisches Kabel nach einem der Ansprüche 1 bis 5, wobei
die erste Einlage (12) wasserabsorbierend ist.

7. Optisches Kabel nach einem der Ansprüche 1 bis 6, wobei
eine Farbe der ersten Einlage (12) sich von denen des Bündelbandes (13) und der optischen Fasern (11) unterscheidet.

## Revendications

1. Câble optique comprenant une ou plusieurs unités (10) comportant chacune uniquement une pluralité de fibres optiques (11), une première interposition (12) et une bande de faisceau (13) ; dans lequel :
la pluralité de fibres optiques (11) est regroupée par la bande de faisceau (13)
la première interposition (12) est fournie entre les fibres optiques (11) pour empêcher les fibres optiques (11) d'entrer en contact les unes avec les autres, et
les fibres optiques (11) et la première interposition (12) sont regroupées par la bande de faisceau (13) dans un état où les fibres optiques (11) et la première interposition (12) sont en contact les unes avec les autres.

2. Câble optique selon la revendication 1, comprenant : une pluralité desdites unités (10) ;
une deuxième interposition (21) fournie entre les unités (10) qui empêche les fibres optiques (11) incluses chacune dans des unités (10) différentes parmi les unités (10) d'entrer en contact les unes avec les autres, dans lequel
les unités (10) sont regroupées par une gaine (30) du câble optique dans un état où les unités (10) et la deuxième interposition (21) sont en contact les unes avec les autres.

3. Câble optique selon la revendication 2, dans lequel la deuxième interposition (21) présente une absorption d'eau.

4. Câble optique selon la revendication 2 ou 3, comprenant
une troisième interposition (22) qui empêche une fibre optique (11) incluse dans l'une quelconque des unités (10) d'entrer en contact avec la gaine (30).

5. Câble optique selon la revendication 4, dans lequel la troisième interposition (22) présente une absorption d'eau.

6. Câble optique selon l'une quelconque des revendications 1 à 5, dans lequel la première interposition (12) présente une absorption d'eau.

7. Câble optique selon l'une quelconque des revendications 1 à 6, dans lequel
une couleur de la première interposition (12) diffère de celles de la bande de faisceau (13) et des fibres optiques (11).
